# EUROPEAN PATENT SPECIFICATION

(11) **EP 2 387 831 B1**
(45) Date of publication and mention of the grant of the patent: **21.03.2018**
(21) Application number: 10732098.8
(22) Date of filing: 14.01.2010
(51) Int. Cl.: H04B 10/00, H04B 10/291

(54) **OPTICAL COMMUNICATION USING COUPLED OPTICALLY PUMPED AMPLIFIERS**
OPTISCHE KOMMUNIKATION MITHILFE GEKOPPELTER UND OPTISCH GEPUMPTER VERSTÄRKER
COMMUNICATION OPTIQUE UTILISANT DES AMPLIFICATEURS POMPÉS OPTIQUEMENT COUPLÉS

(30) Priority: 16.01.2009 US 355512
(43) Date of publication of application: 23.11.2011
(73) Proprietor: Neptune Subsea IP Limited, Romford RM3 0SD (GB)
(72) Inventor: CHANG, Do-Il, Allen, TX 75013 (US); PELOUCH, Wayne, S., Allen, TX 75013 (US)
(74) Representative: Barker Brettell LLP
(86) International application number: PCT/US2010/021072
(87) International publication number: WO 2010/083332

(56) References cited:
- EP-A2- 1 180 833
- US-B1- 6 567 208
- US-B1- 6 711 359
- US-B2- 7 085 039
- US-B2- 7 145 716
- US-B2- 7 251 071

## Description

### BACKGROUND

Fiber-optic communication networks serve a key demand of the information age by providing high-speed data between network nodes. Fiber optic communication networks include an aggregation of interconnected fiber-optic links. Simply stated, a fiber-optic link involves an optical signal source that emits information in the form of light into an optical fiber. Due to principles of internal reflection, the optical signal propagates through the optical fiber until it is eventually received into an optical signal receiver. If the fiber-optic link is bi-directional, information may be optically communicated in reverse typically using a separate optical fiber.

Fiber-optic links are used in a wide variety of applications, each requiring different lengths of fiber-optic links. For instance, relatively short fiber-optic links may be used to communicate information between a computer and its proximate peripherals, or between local video source (such as a DVD or DVR) and a television. On the opposite extreme, however, fiber-optic links may extend hundreds or even thousands of kilometers when the information is to be communicated between two network nodes.

Long-haul and ultra-long-haul optics refers to the transmission of light signals over long fiber-optic links on the order of hundreds or thousands of kilometers. Transmission of optic signals over such long distances presents enormous technical challenges. Significant time and resources may be required for any improvement in the art of long-haul and ultra-long-haul optical communication. Each improvement can represent a significant advance since such improvements often lead to the more widespread availability of communication throughout the globe. Thus, such advances may potentially accelerate humankind's ability to collaborate, learn, do business, and the like, regardless of where an individual resides on the globe.

One of the many challenges that developers of long-haul optic links face involves fiber loss. When an optical signal is transmitted into an optical fiber, that optical signal has a certain power. In Dense Wavelength Division Multiplexing (DWDM), that optical power is split between several channels, each channel corresponding to optical signals at or around a certain corresponding wavelength. However, as the optical signal travels through the optical fiber, the power of the optical signal decreases in an approximately logarithmically linear fashion. Even the best optical fibers have some attenuation per unit length of fiber. These challenges cannot always be addressed by simply increasing the optical power of the input optical signal, since high optical power can cause non-linear degradation of the signal quality. Saturation effects also cause the electrical power required to transmit at a particular optical power to increase dramatically as the optical power approaches a saturation point.

Accordingly, in repeatered systems, repeaters are often used at certain intervals in a length of optical fiber to thereby amplify the optical signal. The repeaters are typically placed at a sufficiently close distance that the optical signal power is still a significant level above the optical noise. If the optical signal were permitted to approach too close to or decline below the optical noise, the optical signal would become difficult or impossible to retrieve. Repeaters require electrical power in order to perform the optical amplification. Accordingly, if power is otherwise unavailable to the repeater, the power may be supplied via an electrical conductor in the optical cable itself. A typical distance between repeaters can be, for example, 40 to 100 kilometers.

In some cases, if the distance from the transmission terminal to the receiver terminal is not too long, the optical link may not use repeaters at all. Such unrepeatered systems might use a combination of a Remote Optically Pumped Amplifier (ROPA) and forward and backward Raman pumping in order to extend the distance for such unrepeatered links to 300 kilometers or more. An example of a prior art system can be found in US6711359.

### BRIEF SUMMARY

Embodiments described herein relate to coupling of optically pumped amplifiers between two nodes of an optical communications system. In one embodiment, the residual optical pump power used to power a forward remote optically pumped amplifier for one direction of optical communications system is diverted into the opposite direction of the optical communications system to at least partially power a backward remote optically pumped amplifier. Other embodiments also divert the residual optical pump power used to power a backward remote optically pumped amplifier for one direction of the optical communications system into the opposite direction of the optical communications system to at least partially power a forward remote optically pumped amplifier. In one embodiment, an optical link in the optical communications system includes both forward and backward Raman amplifiers, as well as forward and backward optically (for example, remote optically) pumped amplifiers. Such coupling has the potential to increase reliability and/or efficiency of the optical communications system.

This Summary is not intended to identify key features or essential features of the claimed subject matter, nor is it intended to be used as an aid in determining the scope of the claimed subject matter.

### BRIEF DESCRIPTION OF THE DRAWINGS

In order to describe the manner in which the above-recited and other advantages and features can be obtained, a more particular description of various embodiments will be rendered by reference to the appended drawings. Understanding that these drawings depict only sample embodiments and are not therefore to be considered to be limiting of the scope of the invention, the embodiments will be described and explained with additional specificity and detail through the use of the accompanying drawings in which:
Figure 1 schematically illustrates an example optical communications network including two optically communicating terminals;
Figure 2 illustrates an optical link that connects two nodes in an optical communication network such as that of Figure 1, and that includes a forward optically pumped amplifier, and a backward optically pumped amplifier for each optical communication direction, and in which the optically pumped amplifiers are crosscoupled;
Figure 3 illustrates an example optical power profile of an eastern optical signal as it traverses eastwardly in Figure 2;
Figure 4 illustrates a flowchart of a method of using forward optical pump power from one optical communication direction to supplement the optical powering of the backward optically pumped amplifier in the opposite optical communication direction;
Figure 5 illustrates optical power profiles comparing the profile of an optical signal in a link that employs pump power cross coupling, as compared to a similar link that does not employ cross coupling;
Figure 6 illustrates optical power profiles that shows performance in the case of a backward Raman pump failure comparing the case where pump power cross coupling is employed, compared to a similar system in which cross coupling is not employed; and
Figure 7 illustrates optical power profiles that shows performance in the case of a forward Raman pump failure comparing the case where pump power cross coupling is employed, compared to a similar system in which cross coupling is not employed.

### DETAILED DESCRIPTION

In accordance with embodiments described herein, an optical communications system is described in which an optical link uses optically coupled optically pumped amplifiers. In one embodiment, the residual optical pump power used to power a forward optically pumped amplifier (e.g., a remote optically pumped amplifier) for one direction of the optical communications system is diverted into the opposite direction of the optical communications system to at least partially power a backward optically pumped amplifier. Optical power coupling from the backward to the forward optically pumped amplifiers may also be employed. In one embodiment, an optical link in the optical communications system includes both forward and backward Raman distributed amplification, as well as forward and backward optically pumped amplifiers.

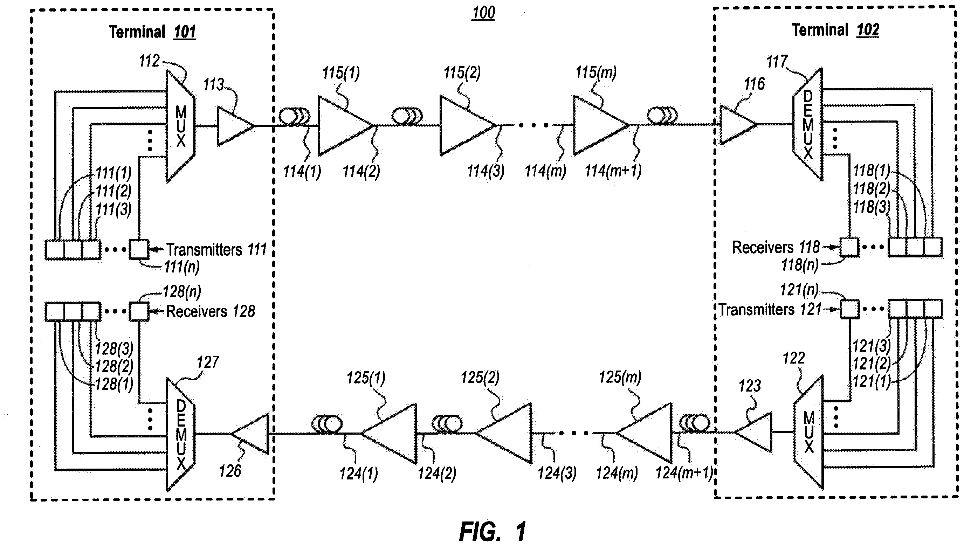

Figure 1 schematically illustrates an example optical communications system 100 in which the principles described herein may be employed. In the optical communications system 100, information is communicated between terminals 101 and 102 via the use of optical signals. For purposes of convention used within this application, optical signals travelling from the terminal 101 to terminal 102 will be referred to as being "eastern", whereas optical signals traveling from the terminal 102 to the terminal 101 will be referred to as being "western". The terms "eastern" and "western" are simply terms of art used to allow for easy distinction between the two optical signals traveling in opposite directions. The use of the terms "eastern" and "western" does not imply any actual geographical relation of components in Figure 1, nor to any actual physical direction of optical signals. For instance, terminal 101 may be geographical located eastward of the terminal 102, even though the convention used herein has "eastern" optical signals traveling from the terminal 101 to the terminal 102.

In one embodiment, the optical signals are Wavelength Division Multiplexed (WDM) and potentially Dense Wavelength Division Multiplexed (DWDM). In WDM or DWDM, information is communicated over each of multiple distinct optical channels called hereinafter "wavelength division optical channels". Each wavelength division optical channel is allocated a particular frequency for optical communication. Accordingly, in order to communicate using WDM or DWDM optical signals, the terminal 101 may have "n" optical transmitters 111 (including optical transmitters 111(1) through 111(n), where n is a positive integer), each optical transmitter for transmitting over a corresponding eastern wavelength division optical channel. Likewise, the terminal 102 may have "n" optical transmitters 121 including optical transmitters 121(1) through 121(n), each also for transmitting over a corresponding western wavelength division optical channel. The principles described herein are not limited, however, to communications in which the number of eastern wavelength division optical channels is the same as the number of western wavelength division optical channels. Furthermore, the principles described herein are not limited to the precise structure of the each of the optical transmitters. However, lasers are an appropriate optical transmitter for transmitting at a particular frequency. That said, the optical transmitters may each even be multiple laser transmitters, and may be tunable within a frequency range.

As for the eastern channel for optical transmission in the eastern direction, the terminal 101 multiplexes each of the eastern optical signals from the optical transmitters 111 into a single eastern optical signal using optical multiplexer 112, which may then be optically amplified by an optional eastern optical amplifier 113 prior to being transmitted onto a first fiber link 114(1).

There are a total of "m" repeaters 115 and "m+1" optical fiber links 114 between the terminals 101 and 102 in each of the eastern and western channels. However, there is no requirement for the number of repeaters in each of the eastern and western channels to be equal. In an unrepeatered optical communication system, "m" would be zero such that there is but a single fiber link 114(1) and no repeaters between the terminals 101 and 102. In a repeatered optical communication system, "m" would be one or greater. Each of the repeaters, if present, may consume electrical power to thereby amplify the optical signals.

The eastern optical signal from the final optical fiber link 114(m+1) is then optionally amplified at the terminal 102 by the optional optical amplifier 116. The eastern optical signal is then demultiplexed into the various wavelength division optical channels using optical demultiplexer 117. The various wavelength division optical channels may then be received and processed by corresponding optical receivers 118 including receivers 118(1) through 118(n).

As for the western channel for optical transmission in the western direction, the terminal 102 multiplexes each of the western optical signals from the optical transmitters 121 (including optical transmitters 121(1) through 121(n)) into a single western optical signal using the optical multiplexer 122. The multiplexed optical signal may then be optically amplified by an optional western optical amplifier 123 prior to being transmitted onto a first fiber link 124(m+1). If the western optical channel is symmetric with the eastern optical channel, there are once again "m" repeaters 125 (labeled 125(1) through 125(m)), and "m+1" optical fiber links 124 (labeled 124(1) through 124(m+1)). Recall that in an unrepeatered environment, "m" may be zero such that there is only one optical fiber link 124(1) and no repeaters 125 in the western channel.

The western optical signal from the final optical fiber link 124(1) is then optionally amplified at the terminal 101 by the optional optical amplifier 126. The western optical signal is then demultiplexed using optical demultiplexer 127, whereupon the individual wavelength division optical channels are received and processed by the receivers 128 (including receivers 128(1) through 128(n)). Terminals 101 and/or 102 do not require all the elements shown in optical communication system 100. For example, optical amplifiers 113, 116, 123, and/or 126 might not be used in some configurations. Furthermore, if present, each of the corresponding optical amplifiers 113, 116, 123 and/or 126 may be a combination of multiple optical amplifiers if desired.

Often, the optical path length between repeaters is approximately the same. The distance between repeaters will depend on the total terminal-to-terminal optical path distance, the data rate, the quality of the optical fiber, the loss-characteristics of the fiber, the number of repeaters (if any), the amount of electrical power deliverable to each repeater (if there are repeaters), and so forth. However, a typical optical path length between repeaters (or from terminal to terminal in an unrepeatered system) for high-quality single mode fiber might be about 50 kilometers, and in practice may range from 30 kilometers or less to 90 kilometers or more. That said, the principles described herein are not limited to any particular optical path distances between repeaters, nor are they limited to repeater systems in which the optical path distances are the same from one repeatered segment to the next.

The optical communications system 100 is represented in simplified form for purpose of illustration and example only. The principles described herein may extend to much more complex optical communications systems. The principles described herein may apply to optical communications in which there are multiple fiber pairs, each for communicating multiplexed WDM optical signals. Furthermore, the principles described herein also apply to optical communications in which there are one or more branching nodes that split one or more fiber pairs and/or wavelength division optical channels in one direction, and one or more fiber pairs and/or wavelength division optical channels in another direction.

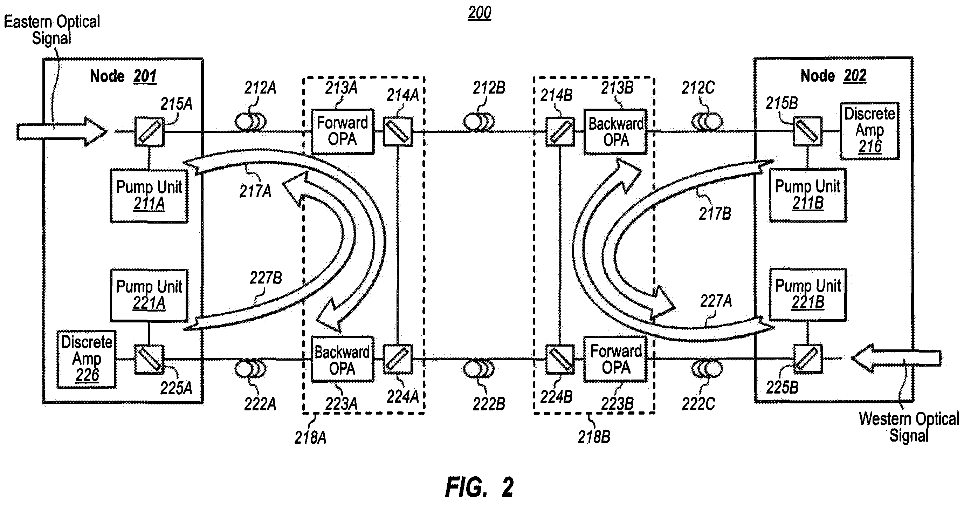

Figure 2 illustrates an optical link 200 that connects two nodes 201 and 202 in an optical communication network. For instance, if the optical link 200 is used in the optical communications system 100 of Figure 1, and the optical communications system 100 is an unrepeatered system, the node 201 may be the terminal 101 and the node 202 may be the terminal 102. However, in a repeatered environment, nodes 201 and 202 may be a terminal on one end and a repeater set on another. For instance, node 201 might be terminal 101 of Figure 1, whereas node 202 might be the repeater set 115(1) and 125(1) of Figure 1. On the other hand, node 201 might be the repeater set 115(m) and 125(m) of Figure 1, whereas node 202 might be the terminal 102 of Figure 1. If there is more than one repeater (i.e., m > 1) in the repeatered environment, it is possible that both nodes 201 and 202 may both be repeater sets. Generally stated, if nodes 201 and 202 are both repeater sets, node 201 may be repeater set 115(k) and 125(k) of Figure 1, whereas node 202 may be repeater set 115(k+1) and 125(k+1) of Figure 1, where k is any positive integers from 1 to a maximum of m-1.

The optical link 200 is bidirectional and includes an eastern fiber link and a western fiber link. The eastern fiber link propagates the eastern optical signal from the node 201 to the node 202. The western fiber link propagates the western optical signal from the node 202 to the node 201. Recall, however, that the terms "eastern" and "western" are used herein merely to distinguish one signal from another and not to represent any sort of actual geographical relation or direction. Components or gain stages within the eastern fiber link will also be sometimes modified herein by the term "eastern", and components or gain stages within the western fiber link will also be sometimes modified herein by the term "western".

The eastern fiber link transmits the eastern optical signal through the initial eastern optical fiber span 212A, through the eastern forward Optically Pumped Amplifier (OPA) 213A, through a first eastern optical multiplexer/demultiplexer (hereinafter, "mux/demux") 214A, through the eastern intermediate optical fiber span 212B, through a second eastern optical mux/demux 214B, through the backward OPA 213B, and through the final eastern optical fiber span 212C to the node 202. In so doing, the optical signal may go through a number of gain stages for each direction. For example, the eastern optical signal may potentially pass through forward Raman amplification gain stage 212A, forward OPA 213A, backward OPA 213B, backward Raman amplification gain stage 212C, and discrete gain stage 216 in node 202.

Note that the term "forward" and "backward" OPA refers to the direction of the optical pump relative to the signal direction, whereby the optical pump of the "forward" OPA is in the same direction as the signal and the optical pump of the "backward" OPA is in the opposite direction as the signal.

As a potential first gain stage for the eastern optical link, the optical fiber span 212A may serve as a distributed forward Raman amplifier, being powered by the optical pump unit 211A. The eastern optical signal transmitted from node 201 to node 202 represents the actual information communicated eastward. The pump unit 211A, on the other hand, transmits optical pump power that has a higher frequency (shorter wavelength) that is outside of the optical signal band. That energy is converted to the signal wavelength(s) to optically amplify the optical signal. The pump unit 211A provides forward Raman pump power into the optical fiber span 212A using optical mux/demux 215A to thereby co-propagate with and amplify the optical signal in a distributed manner along the optical fiber span 212A.

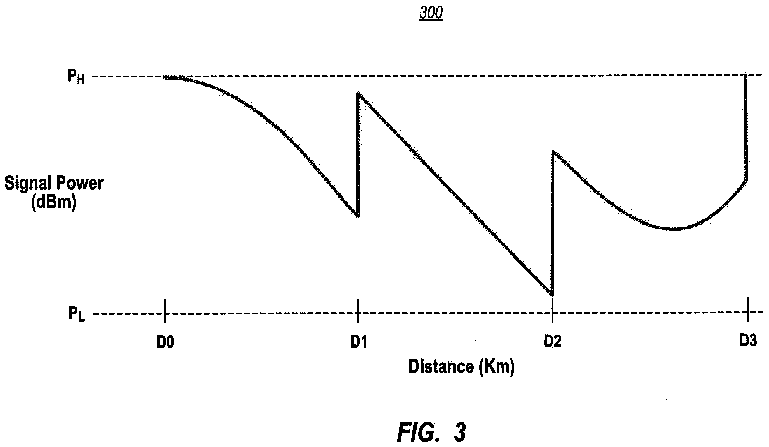

Figure 3 illustrates an example power-distance optical profile diagram 300 showing examples of optical signal power as the optical signal travels through the eastern fiber link of Figure 2 in the case where all illustrated gain stages are present. An example power-distance is not shown for the western optical link, although the power-distance profile may be similar, but reversed. That said, there is no requirement for symmetry in optical power profiles in the eastern and western optical fiber links. In Figure 3, a maximum power for the optical fiber link is illustrated as P_{H}, whereas the minimum is illustrated as P_{L}. Positions D0 and D3 represent the positions of the node 201 and the node 202, respectively. Positions D1 and D2 represent the positions of the forward OPA 213A and backward OPA 213B, respectively.

In the first gain stage that occurs between distance D0 and D1 in the optical fiber span 212A, the forward Raman amplification initially slows the attenuation of the optical signal, but as the forward Raman amplification diminishes further from distance D0, the approximate logarithmically linear attenuation of the optical fiber begins to dominate. That said, however, even when the optical fiber attenuation dominates, the forward Raman amplification is still sufficient to mitigate the optical fiber attenuation as compared to the attenuation that would occur without forward Raman amplification. Figure 3 is not necessarily drawn to scale, and is not necessarily intended to convey an actual optical power-distance profile, but is merely used to describe the power profile from a general perspective.

Returning to Figure 2, as a second gain stage, the residual forward Raman optical pump power is then used to power the forward OPA 213A, which then amplifies the eastern optical signal. Although the forward OPA 213A is shown as a discrete amplifier, it may be distributed over all or part of fiber span 212A. The OPAs 213A, 213B, 223A and 223B illustrated in Figure 2 may be what is more commonly referred to as "Remote Optically Pumped Amplifiers" or (ROPAs). However, the term "remote" is not desired for this patent application since the term is relative. In one embodiment, however, the OPAs are at least 30 kilometers in optical path distance from the nearest repeater or terminal, and the optical path distance between nodes 201 and 202 is at least 100 kilometers, but may even be greater than 300 kilometers, perhaps even surpassing 500 kilometers. Referring to Figure 3, the discrete amplification at distance D1 is a result of the forward OPA 213A.

The OPAs 213A, 213B, 223A and 223B may each be any optically pumped amplifier. Examples include rare-earth doped fiber amplifiers (such as Erbium-doped fiber amplifiers), optically-pumped semiconductor amplifiers, or perhaps highly efficient Raman amplifiers.

Note that in the optical link 200, there is a forward OPA as well as a backward OPA in each direction. For instance, for the eastern channel, the forward OPA 213A is more proximate the node 201, and the backward OPA 213B is more proximate the node 202. This allows for more efficient use of the residual forward and backward Raman optical pump power to power the OPAs, and itself represents a significant advancement in the art permitting the distance between nodes 201 and 202 to be extended, all other things being equal. The western channel also has a forward OPA 223B that is more proximate the node 202 and the backward OPA 223A that is more proximate the node 201, resulting in potential efficiency improvement for the western optical channel as well.

Returning to the eastern optical fiber link, there is still some residual forward optical pump power remaining even after the forward Raman amplification that occurred in the optical fiber span 212A, and even after the amplification by the forward OPA 213A. At least some, and potentially all, of that residual forward optical pump power is diverted to the opposite optical fiber link for use in the backward OPA 223A. This general diversion of this forward Raman optical pump power is represented generally by the arrow 217A. The resulting amplification in the backward OPA 223A may be significantly more than the forward Raman amplification that may have occurred in the eastern intermediate optical fiber span 212B had the residual forward pump optical power been allowed to continue further in the eastern optical fiber link into the intermediate optical fiber 212B.

To facilitate this diversion, an optical mux/demux 214A is placed east of the forward OPA 213A. This optical mux/demux 214A permits the eastern optical signal (or at least a majority of that signal) to pass through into the intermediate optical fiber span 212B, but diverts optical pump power towards another optical mux/demux 224A in the western optical fiber link. The optical mux/demux 224A then injects this residual optical pump power into the backward OPA 223A for help in powering the backward OPA 223A. On the other hand, amplification of the forward OPA 213A may also be assisted by the diversion of residual backward Raman pump optical power from the western optical fiber link. This is represented generally by the arrow 227B. However, more regarding this diversion will be described further below.

Returning to the eastern channel, the eastern optical signal passes into the intermediate optical fiber span 212B, where it does not experience much, if any, amplification at all. Instead, referring to Figure 3, the optical power attenuates approximately logarithmically linearly in the distanced between D1 and D2, which corresponds to the length and attenuation of the optical fiber span 212B.

As a third optical gain stage, the optical signal passes through the second eastern mux/demux 214B and then is amplified by the backward OPA 213B. Although the backward OPA 213B is shown as a discrete amplifier, it may be distributed over all or part of fiber span 212C. Part of the optical pump power used to supply the backward OPA 213B is due to a residual amount of backward Raman pump optical power from the pump unit 211B. A remaining amount is due to diversion of forward Raman pump optical power from the opposite optical fiber link as represented by the arrow 227A. If the forward Raman pumping of the western optical link is not efficient, then there might be a significant amount of forward optical pump power remaining to be diverted into the eastern optical link.

In one embodiment, the backward Raman amplification performed in the optical fiber span 212C for the eastern signal (and in optical fiber span 222A for the western signal) is quite efficient allowing strong distributed gain in the optical fiber span 212C compared to forward Raman amplification of eastern signal in optical fiber span 212A (and western signal in optical fiber span 222C). This high gain means, however, that there is relatively little residual optical pump power remaining to power the backward OPA 213B. Accordingly, the diverted forward Raman pump optical power 227A from the western optical link (and 217A from the eastern optical link) helps a great deal when used to optically power the backward OPA 213B of the eastern optical fiber link (and backward OPA 223A of the western optical fiber link). In one embodiment, the optical fiber spans 212C and 222A are primarily negative chromatic dispersion (D-) fiber, or at least have a relatively smaller effective cross-sectional area for propagation of light. The optical fiber spans 212A and 222C, on the other hand, may be positive chromatic dispersion (D+) fiber, or at least have a relatively larger effective cross-sectional area as compared to the optical fiber spans 212C and 222A. In this case, the backward OPA 213B is helped greatly by the diverted optical pump power from the opposite optical link represented by arrow 227A. Large effective cross-sectional area fiber also reduces optical signal power intensity thereby reducing the non-linear degradation of the signal quality. Generally, signal power at the backward OPA 213B is less than at the forward OPA 213A due to uncompensated fiber attenuation in span 212B. Therefore, more amplification can typically be achieved in the backward OPA 213B compared to the forward OPA 213A given the same OPA and same amount of pump power. In other words, higher pump power is typically required in forward OPA 213A to achieve similar gain compared to backward OPA 213B.

As the fourth optical gain stage, and as alluded to already, the pump unit 211B provides backward Raman pump optical power to thereby perform backward Raman amplification in the optical fiber 212C. Referring to Figure 3, this results in distributed backward Raman amplification occurring between distances D2 and D3. Figure 3 demonstrates one embodiment of a power-distance profile 300 in which the distributed gain between distances D2 and D3 is much larger than the distributed gain between D0 and D1 due to the use of D- and D+ fiber as described above. The backward Raman pump power of pump unit 211B is injected into the optical fiber span 212C using the optical mux/demux unit 215B. Following along arrow 217B, the backward Raman pump optical power is degraded, however, upon performing backward Raman amplification in the optical fiber span 212C. As previously mentioned, the residual backwards Raman pump optical power is then used to power the backward OPA 213B. A residual amount remaining after the backward OPA 213B is then diverted using optical mux/demux 214B into the western optical fiber link using optical mux/demux 224B for use in optically powering the forward OPA 223B in the western optical fiber link.

In node 202, discrete amplifier 216 provides the fifth optical gain stage. For example, discrete amplifier, 216 may amplify the optical signal to the next transmission optical fiber (if it is used in a repeater) or to the receiver (if it is located in a terminal). Referring to Figure 3, this discrete amplification may occur at distance D3, corresponding to node 202. If the node 202 is a terminal, the eastern optical signal may then be directed to the terminal receivers such as, for example, receivers 118 of Figure 1. If the node 202 is a repeater, the eastern optical signal may then be transmitted (perhaps after other processing such as, for example, chromatic dispersion compensation, and gain-flattening filtering) to yet other nodes in the optical communication system. Although not shown, there may be optical isolators keeping west bound optical signals from entering or exiting the eastern optical fiber link.

As for the western optical link, there may once again be five gain stages. The first potential gain stage is the optical fiber span 222C which serves as a distributed forward Raman amplifier, being powered by the optical pump unit 221B. The western optical signal transmitted from node 202 to node 201 represents the actual information communicated westward. The pump unit 221B, on the other hand, transmits optical pump power that has a higher frequency (shorter wavelength) that is outside of the optical signal band. That energy is converted to the signal wavelength(s) to optically amplify the optical signal. The pump unit 221B provides that forward Raman pump power into the optical fiber span 222C using the optical mux/demux 225B to thereby co-propagate with and amplify the optical signal in a distributed manner along the optical fiber span 222C.

As a second gain stage, the residual forward Raman optical pump power is then used to power the forward OPA 223B, which then discretely amplifies the western optical signal.

In the western optical fiber link, there is still some residual forward optical pump power remaining even after the forward Raman amplification that occurred in the optical fiber span 222C, and even after the amplification by the forward OPA 223B. At least some, and potentially all, of that residual forward optical pump power is diverted to the opposite optical fiber link for use in the backward OPA 213B, as previously mentioned. This general diversion of this forward Raman optical pump power is represented generally by the arrow 227A. The resulting amplification in the backward OPA 213B may be significantly more than the forward Raman amplification that may have occurred in the western intermediate optical fiber span 222B had the residual forward pump optical power been allowed to continue further in the western optical fiber link into the intermediate optical fiber 222B.

To facilitate this diversion, an optical mux/demux 224B is placed west of the forward OPA 223B. This optical mux/demux 224B permits the western optical signal (or at least a majority of that signal) to pass through into the intermediate optical fiber span 222B, but diverts optical pump power towards another optical mux/demux 214B in the eastern optical fiber link. The optical mux/demux 214B then injects this residual optical pump power into the backward OPA 213B for help in powering the backward OPA 213B. On the other hand, amplification of the forward OPA 223B may also be assisted by the diversion of residual backward Raman pump optical power from the eastern optical fiber link, as previously described, and as represented by the arrow 217B.

The western optical signal passes into the intermediate optical fiber span 222B, where it does not experience much amplification at all. Instead, optical power attenuates approximately logarithmically linearly as optical signals are known to do as they pass through optical fiber without amplification.

As a third optical gain stage, the western optical signal passes through the western mux/demux 224A and then is discretely amplified by the backward OPA 223A. Part of the optical pump power used to supply the backward OPA 223A is due to a residual amount of backward Raman pump optical power from the pump unit 221A. A remaining amount is due to diversion of forward Raman pump optical power from the eastern optical fiber link as represented by the arrow 217A.

As the fourth optical gain stage, and as alluded to already, the pump unit 221A provides backward Raman pump optical power to thereby perform backward Raman amplification in the optical fiber 222A. The backward Raman pump optical power is injected into the optical fiber span 222A using the optical mux/demux unit 225A. Following along arrow 227B, the backward Raman pump optical power is degraded, however, upon performing backward Raman amplification in the optical fiber span 222A. As previously mentioned, the residual backwards Raman pump optical power is then used to power the backward OPA 223A. A residual amount remaining after the backward OPA 223A is then diverted using optical mux/demux 224A into the eastern optical fiber link using optical mux/demux 214A for use in optically powering the forward OPA 213A in the eastern optical fiber link.

In node 201, the fifth gain stage may be the discrete amplifier 226, which amplifies the optical signal to the next transmission optical fiber or to the receivers if the node 201 is located in terminal. If the node 201 is a terminal, the western optical signal may then be directed to the terminal receivers such as, for example, receivers 128 of Figure 1. The discrete amplifiers 216 and 226 may be any amplifier that is capable of amplifying light, whether powered by electricity or optical power. Examples include rare-earth doped fiber amplifiers (such as Erbium-doped fiber amplifiers), high efficiency Raman amplifiers, and/or a Semiconductor Optical Amplifier (SOA).

If the node 201 is a repeater, the western optical signal may then be transmitted (perhaps after other processing such as, for example, chromatic dispersion compensation, and gain-flatten filtering) to yet other nodes in the optical communication system. Although not shown, there may be optical isolators keeping east bound optical signals from entering or exiting the western optical fiber link.

Accordingly, in Figure 2, there are four examples of cross fiber optical power diversion as follows:
A) diversion of forward Raman pump power from the eastern optical fiber link to supplement the optical powering of the backward OPA in the western optical fiber link (hereinafter referred to as "diversion type A") which is represented in Figure 2 by arrow 217A;
B) diversion of forward Raman pump power from the western optical fiber link to supplement the optical powering of the backward OPA in the eastern optical fiber link (hereinafter referred to as "diversion type B") which is represented in Figure 2 by arrow 227A;
C) diversion of backward Raman pump power from the eastern optical fiber link to supplement the optical powering of the forward OPA in the western optical fiber link (hereinafter referred to as "diversion type C") which is represented in Figure 2 by arrow 217B; and
D) diversion of backward Raman pump power from the western optical fiber link to supplement the optical powering of the forward OPA in the eastern optical fiber link (hereinafter referred to as "diversion type D") which is represented in Figure 2 by arrow 227B.

One embodiment of diversion type A, as depicted in Figure 2, comprises both a forward OPA 213A and a backward OPA 223A. In another embodiment of diversion type A, only one OPA (either 213A or 223A) is employed. One embodiment of diversion type B, as depicted in Figure 2, comprises both a forward OPA 223B and a backward OPA 213B. In another embodiment of diversion type B, only one OPA (either 223B or 213B) is employed. One embodiment of diversion type C, as depicted in Figure 2, comprises both a forward OPA 223B and a backward OPA 213B. In another embodiment of diversion type C, only one OPA (either 223B or 213B) is employed. One embodiment of diversion type D, as depicted in Figure 2, comprises both a forward OPA 213A and a backward OPA 223A. In another embodiment of diversion type D, only one OPA (either 213A or 223A) is employed.

In Figure 2, all of the diversion types A, B, C and D are shown. However, the principles described herein may apply if there are fewer than all of these diversion types present as well. For instance, the principles described herein may provide benefits even if just one, two or three of the diversion types A, B, C and D are provided.

Referring to Figure 2, the OPAs 213A and 223A, and the optical mux/demuxes 214A and 214B may be encompassed within a single assembly 218A. In that case, the assembly 218A might be pre-manufactured and may be, for example, a splice box. The box would have at least four ports for each fiber pair; namely, an eastern fiber input terminal (e.g., proximate the forward OPA 213A), an eastern fiber output terminal (e.g., proximate the optical mux/demux 214A), a western fiber input terminal (e.g., proximate the optical mux/demux 224A), and a western fiber output terminal (e.g., proximate the backward OPA 223A). The assembly 218A has an eastern optical channel and a western optical channel. The eastern optical channel is between the eastern input and output terminals that includes the forward OPA 213A and the optical mux/demux 214A. The western optical channel is between the western input and output terminals that includes the optical mux/demux 224A and the backward OPA 223A.

The assembly 218B also includes a forward OPA 223B, a backward OPA 213B, and two optical mux/demuxes 224B and 214B, and may be similarly configured as described for the assembly 218A. However, the assembly 218A may be simplified in the case where not all of the diversion types A and D are employed. For example, if only diversion type A is employed represented by arrow 217A, the backward OPA 223A may be placed to the east of or to the west of the optical multiplexer 224A. Furthermore, forward OPA 213A might not be present all. If only diversion type D is employed represented by arrow 227B, the forward OPA 213A may be placed to the east of or to the west of the optical multiplexer 214A. Furthermore, backward OPA 223A might not be present all. Assembly 218B may have similar simplifications in the case of there only being one or diversion types B and C.

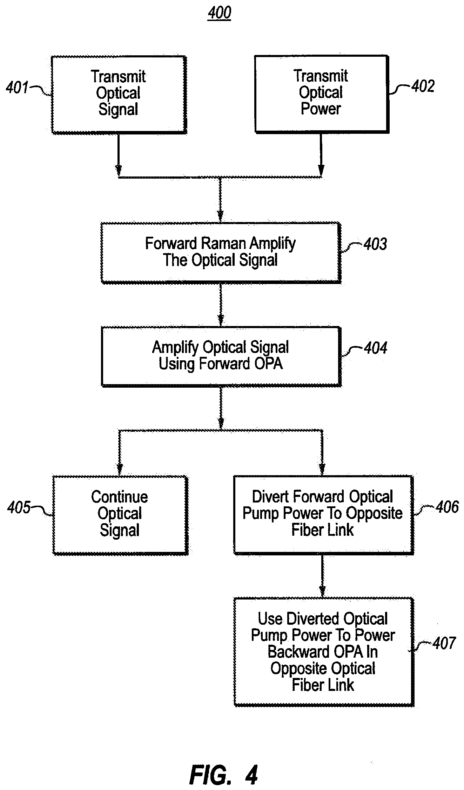

Figure 4 illustrates a flowchart of a method 400 for using forward optical coupling to supplement the backward OPA in the opposite optical fiber link. The optical signal representing the information to be communicated is transmitted onto the optical fiber link (act 401). This fiber link will be referred to as the "eastern" fiber link. In addition, the forward optical pump power is also transmitted onto the eastern optical fiber link (act 402). This potentially results in the optical signal being forward Raman amplified using the forward optical pump power (act 403). After a majority of the forward Raman pump optical power has been consumed in the forward Raman amplification, the forward OPA is powered using a residual amount of the forward optical pump power (act 404). The optical signal is then passed further through the eastern optical link (act 405), while the residual forward optical pump power is diverted to the opposite western optical fiber link (act 406). At least some of the diverted optical power is used to optically power the backward OPA in the opposite optical fiber link (act 407). A similar method may be used for backward optical pump power to be diverted to the opposite optical fiber link to optically power the forward OPA in the opposite optical fiber link.

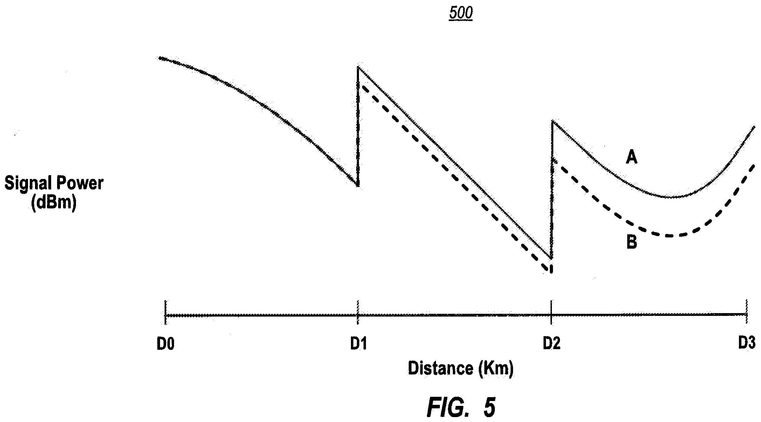

Figure 5 illustrates an example power-distance optical profile diagram 500 that depicts the increased gain that results from one embodiment of the present invention. Profile A represented by the solid line depicts the power-distance profile with optically coupled pumps at locations D1 and D2 as described above with respect to Figure 2. Profile "B" represented by the dashed line depicts the power-distance profile using the same pump power without optically coupled pumps. The higher signal power at locations D1 and D2 are a result of the increased gain efficiency due to the optically coupled pumps as depicted in Figure 2. The optical power profiles of Figure 5 have been obtained by a simulation. The conditions for the simulation are as follows:
1) The distance from D0 to D1 is 40 kilometers and is an SLA optical fiber (OFS fiber, Aeff = 106 µm², dispersion = 20ps/nm-km @1550nm),
2) The distance from D1 to D2 is 40 kilometers and is SLA optical fiber (OFS fiber, Aeff = 106 µm², dispersion = 20ps/nm-km @1550nm),
3) The distance from D2 to D3 is 40 kilometers and is IDF optical fiber (OFS fiber, Aeff = 30 µm², dispersion = -44ps/nm-km @1550nm),
4) The forward and backward OPAs are the same (OFS R37014 erbium fiber 5m),
5) The forward and backwards pumps are the same and are each powered at 172 mW at 1480 nm at the input of the fiber, and
6) The illustrated signal profile is the average of 50 signals.
However, these are just the conditions for one specific simulation and should not be construed as limiting the application of the principles described herein in any way.

Accordingly, comparing profile A and profile B in Figure 5, it can be seen that through the use of a dedicated forward and backward OPA for each eastern and western optical fiber link, and through pump optical power coupling between eastern optical fiber links, optical power is more efficiently used to perform amplification.

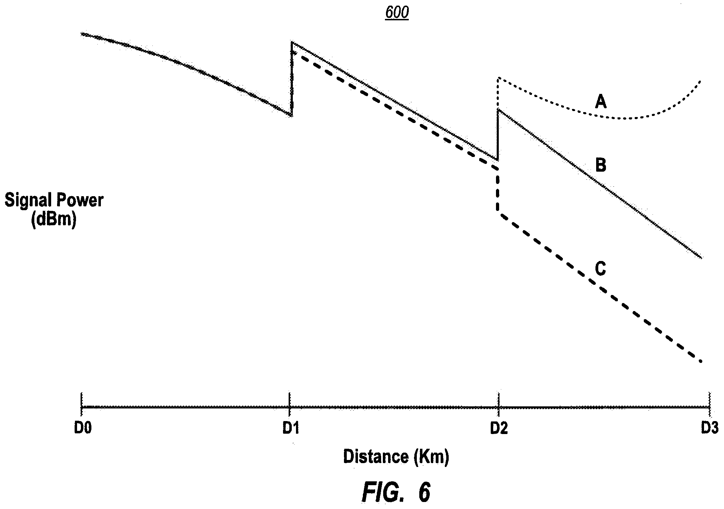

Another benefit of the embodiments described herein is the improved robustness of the communication system when one of the Raman pump units fails. For example, in one embodiment the forward OPA 213A and backward OPA 213B of Figure 2 are rare-earth doped amplifiers. Figure 6 illustrates example power-distance optical profiles 600 in this embodiment for eastern optical signals of Figure 2 during normal operation (profile A with optical pump coupling) and for the case where backward pump unit 211B fails. In the failure case, profile C depicts the power-distance profile when optical pump coupling is not employed. In this case the backward OPA 213B of Figure 2 (being a rare-earth doped amplifier in this embodiment) results in net loss for the signals. This profile C may be compared to profile B which depicts the power-distance profile when optical pump coupling 227A is employed from western forward pump unit 221B of Figure 2. In the case of profile B, the residual pump power obtained through path 227A pumps the backward OPA 213B of Figure 2 (being a rare-earth doped amplifier in this embodiment) resulting in net gain in the backward OPA 213B. Typically the loss of the backward pump unit 211B of Figure 2 without optical pump coupling (profile C of Figure 6) would result in a total loss of optical communications whereas the use of optical pump coupling in this scenario (profile B of Figure 6) would allow optical communication to continue at a slightly degraded quality level.

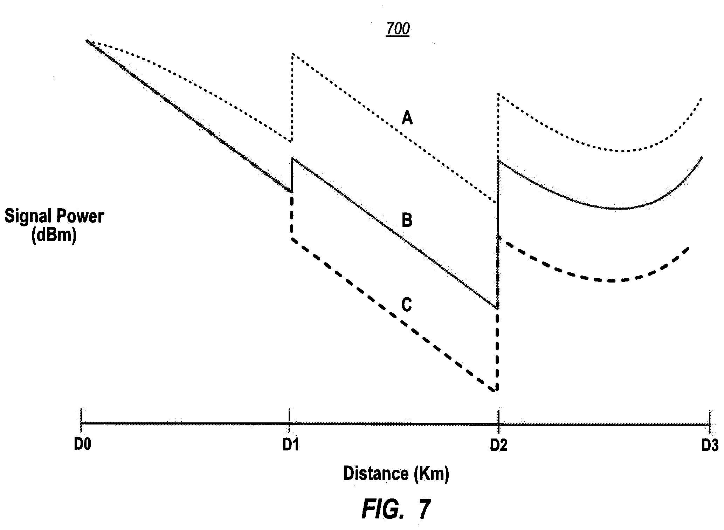

Figure 7 illustrates example power-distance optical profiles 700 in the same embodiment of Figure 6 for eastern optical signals of Figure 2 during normal operation (profile A with optical pump coupling) and for the case where forward pump unit 211A fails. In the failure case, profile C depicts the power-distance profile when optical pump coupling is not employed. In this case the forward OPA 213A of Figure 2 (being a rare-earth doped amplifier in this embodiment) results in net loss for the signals. This profile C may be compared to profile B which depicts the power-distance profile when optical pump coupling 227B is employed from western backward pump unit 221A of Figure 2. In this case the residual pump power obtained through path 227B pumps the forward OPA 213A of Figure 2 (being a rare-earth doped amplifier in this embodiment) resulting in net gain in the forward OPA 213A.

Thus, the principles described herein provide an efficient use of optical pump power while also protecting against many forms of pump failure. The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A method for using a bi-direction optical link (200) having an eastern optical link for communication from a first node (201) to a second node (202) in an optical communications system, and a western optical link for communication from the second node (202) to the first node (201) in an optical communications system, the method comprising:
an act of receiving a western optical signal on the western fiber link;
an act of backward Raman amplifying the western optical signal using backward Raman pump optical power;
after a portion of the backward Raman pump optical power has been consumed in the act of backward Raman amplifying, an act of using at least a portion of the residual backward Raman pump optical power to power a western backward optically pumped amplifier (223A);
after a portion of the residual backward Raman pump optical power has been used to power the western backward optically pumped amplifier (223A), an act of diverting at least a portion of the residual backward Raman pump optical power to the eastern optical link, where at least some of the diverted optical power is used to power an eastern optically pumped amplifier (213A) for amplification of an eastern optical signal in the eastern optical link,
wherein the eastern optically pumped amplifier (213A) is positioned to the west of a place in which the diverted portion of the residual backward Raman pump optical power enters the eastern optical link, the method further comprising:
an act of transmitting an eastern optical signal on the eastern fiber link;
an act of forward Raman amplifying the eastern optical signal using forward Raman pump optical power;
after a portion of the forward Raman pump optical power has been consumed in the act of forward Raman amplifying, an act of using at least a portion of the residual forward Raman pump optical power to power the eastern optically pumped amplifier (213A);
after a portion of the residual forward Raman pump optical power has been used to power the eastern optically pumped amplifier (213A), an act of diverting at least a portion of the residual forward Raman pump optical power to the western optical link, where at least some of the diverted optical power from the eastern optical link is used to power the western backward optically pumped amplifier (223A) for amplification of the western optical signal in the western optical link.

2. The method in accordance with Claim 1, wherein the western optical link experiences backward Raman amplification for at least 30 kilometers before the act of diverting at least the portion of the residual backward Raman pump optical power to the eastern optical link

3. The method in accordance with Claim 1, wherein the eastern optical link experiences forward Raman amplification for at least 30 kilometers before the act of diverting at least the portion of the residual forward Raman pump optical power to the western optical link.

4. An optical link (200) for communication between two nodes (201, 202) in an optical communications system, the optical link (200) comprising:
a first node (201) of the optical communications system;
a second node (202) of the optical communications system,
an eastern fiber link optically coupling the first node (201) and the second node (202) for optical transmission of eastern optical signals travelling from the first node (201) to the second node (202); and
a western fiber link optically coupling the first node (201) and the second node (202) for optical transmission of western optical signals travelling from the second node (201) to the first node (201),
wherein the eastern fiber link comprises:
an eastern optically pumped amplifier (213A);
an eastern fiber span (212A) interconnecting the first node (201) to the eastern optically pumped amplifier (213A); and
an eastern optical multiplexer (214A); and
wherein the western fiber link comprises:
a western backward Raman pump (221A) at or proximate the first node (201);
a western backward optically pumped amplifier (223A);
a western fiber span (222A) interconnecting the western backward Raman pump (221A) to the western backward optically pumped amplifier (223A) such that the western backward Raman pump (221A) injects backward optical power into the western fiber span (222A) thereby causing backward Raman amplification to occur within the western fiber span (222A), and allowing a residual amount of the injected backward optical power from the western backward Raman pump (221A) that remains after the backward Raman amplification to be used to power the western backward optically pumped amplifier (223A);
a western optical demultiplexer (224A) positioned to the east of the western backward optically pumped amplifier (223A) in the western fiber link, and configured to channel at least a majority of the western optical signal further in the western direction in the western fiber link towards the first node (201), and configured to redirect at least some of a residual amount of the injected backward optical power from the western backward Raman pump (221A) that remains after the western backward optically pumped amplifier (223A) to be passed through the eastern optical multiplexer (214A) in the eastern fiber link for use in powering the eastern optically pumped amplifier (213A) in the eastern fiber link;
wherein the eastern optically pumped amplifier (213A) is an eastern forward optically pumped amplifier (213A);
wherein the eastern fiber link further comprises:
an eastern forward Raman pump (211A) at or proximate the first node (201);
an eastern optical demultiplexer (214A) positioned to the east of the eastern forward optically pumped amplifier (213A) in the eastern fiber link, and configured to channel at least a majority of the eastern optical signal that has reached the eastern optical demultiplexer (214A) further in the eastern direction towards the second node (202), and configured to redirect at least some of a residual amount of the injected forward optical power from the eastern forward Raman pump (211A) that remains after the eastern forward optically pumped amplifier (213A) to be used in the western fiber link; and
wherein the western optical link further comprises:
a western optical multiplexer (224A) configured to channel at least a majority of the western optical signal that has reached the western optical multiplexer (224A) further in the western direction towards the first node (201), and configured to redirect at least some of the redirected residual forward optical power from the eastern optical link also into the western backward optically pumped amplifier (223A) in the western optical link to thereby further power the western backward optically pumped amplifier (223A).

5. The optical link (200) in accordance with Claim 4, wherein
the eastern optical multiplexer (214A) in the eastern fiber link is positioned to the east of the eastern optically pumped amplifier (213A) in the eastern fiber link.

6. The optical link (200) in accordance with Claim 4, wherein
the eastern optical multiplexer (214A) in the eastern fiber link is positioned to the west of the eastern optically pumped amplifier (213A) in the eastern fiber link.

7. The optical link (200) in accordance with Claim 4, wherein the eastern optical multiplexer (214A) is the same component as the eastern optical demultiplexer (214A), and wherein the western optical multiplexer (224A) is the same component as the western optical demultiplexer (224A).

8. The optical link (200) in accordance with Claim 4, wherein the first node (201) and the second node (202) are both terminals in an unrepeatered system.

9. The optical link (200) in accordance with Claim 4, wherein at least one of the first node (201) and the second node (202) is a repeater in a repeatered system.

10. The optical link (200) in accordance with Claim 9, wherein the other of the first node (201) and the second node (202) is also a repeater in the repeatered system.

11. The optical link (200) in accordance with Claim 9, wherein the other of the first node (201) and the second node (202) is a terminal in the repeatered system.

12. The optical link (200) in accordance with Claim 4, wherein the western backward optically pumped amplifier (223A) is a rare-earth doped fiber amplifier.

13. The optical link (200) in accordance with Claim 12, wherein the western backward optically pumped amplifier (223A) is an Erbium-doped fiber amplifier.

14. The optical link (200) in accordance with Claim 4, wherein the eastern and western optical links are each more than 100 kilometers in optical path distance.

## Patentansprüche

1. Verfahren zur Verwendung einer bidirektionalen optischen Verbindung (200) mit einer östlichen optischen Verbindung zur Kommunikation von einem ersten Knoten (201) zu einem zweiten Knoten (202) in einem optischen Kommunikationssystem, und einer westlichen optischen Verbindung zu Kommunikation vom zweiten Knoten (202) zum ersten Knoten (201) in einem optischen Kommunikationssystem, wobei das Verfahren umfasst:
einen Akt des Empfangs eines westlichen optischen Signals auf der westlichen Faserverbindung;
einen Akt einer Raman-Verstärkung in Rückwärtsrichtung des westlichen optischen Signals unter Verwendung einer optischen Energie einer Raman-Pumpe in Rückwärtsrichtung;
nachdem ein Teil der optischen Energie der Raman-Pumpe in Rückwärtsrichtung in dem Akt der Raman-Verstärkung in Rückwärtsrichtung verbraucht wurde, einen Akt der Verwendung mindestens eines Teils der verbleibenden optischen Energie der Raman-Pumpe in Rückwärtsrichtung, um einen westlichen optisch in Rückwärtsrichtung gepumpten Verstärker (223A) mit Energie zu versorgen;
nachdem ein Teil der verbleibenden optischen Energie der Raman-Pumpe in Rückwärtsrichtung verwendet wurde, um den westlichen optisch in Rückwärtsrichtung gepumpten Verstärker (223A) mit Energie zu versorgen, einen Akt des Ablenkens mindestens eines Teils der verbleibenden optischen Energie der Raman-Pumpe in Rückwärtsrichtung zur östlichen optischen Verbindung, wobei mindestens etwas von der abgelenkten optischen Energie verwendet wird, um einen östlichen optisch gepumpten Verstärker (213A) zur Verstärkung eines östlichen optischen Signals in der östlichen optischen Verbindung mit Energie zu versorgen,
wobei der östliche optisch gepumpte Verstärker (213A) westlich von einem Ort positioniert ist, an dem der abgelenkte Teil der verbleibenden optischen Energie der Raman-Pumpe in Rückwärtsrichtung in die östliche optische Verbindung eintritt, wobei das Verfahren weiter umfasst:
einen Akt der Übertragung eines östlichen optischen Signals auf der östlichen Faserverbindung;
einen Akt einer Raman-Verstärkung in Vorwärtsrichtung des östlichen optischen Signals unter Verwendung einer optischen Energie einer Raman-Pumpe in Vorwärtsrichtung;
nachdem ein Teil der optischen Energie der Raman-Pumpe in Vorwärtsrichtung in dem Akt der Raman-Verstärkung in Vorwärtsrichtung verbraucht wurde, einen Akt der Verwendung mindestens eines Teils der verbleibenden optischen Energie der Raman-Pumpe in Vorwärtsrichtung, um den östlichen optisch gepumpten Verstärker (213A) mit Energie zu versorgen;
nachdem ein Teil der verbleibenden optischen Energie der Raman-Pumpe in Vorwärtsrichtung verwendet wurde, um den östlichen optisch gepumpten Verstärker (213A) mit Energie zu versorgen, einen Akt des Ablenkens mindestens eines Teils der verbleibenden optischen Energie der Raman-Pumpe in Vorwärtsrichtung zur westlichen optischen Verbindung, wobei mindestens etwas von der abgelenkten optischen Energie von der östlichen optischen Verbindung verwendet wird, um den westlichen optisch in Rückwärtsrichtung gepumpten Verstärker (223A) zur Verstärkung des westlichen optischen Signals in der westlichen optischen Verbindung mit Energie zu versorgen.

2. Verfahren nach Anspruch 1, wobei die westliche optische Verbindung eine Raman-Verstärkung in Rückwärtsrichtung über mindestens 30 Kilometer vor dem Akt der Ablenkung mindestens des Teils der verbleibenden optischen Energie der Raman-Pumpe in Rückwärtsrichtung zur östlichen optischen Verbindung erfährt.

3. Verfahren nach Anspruch 1, wobei die östliche optische Verbindung eine Raman-Verstärkung in Vorwärtsrichtung über mindestens 30 Kilometer vor dem Akt der Ablenkung mindestens des Teils der verbleibenden optischen Energie der Raman-Pumpe in Vorwärtsrichtung zur westlichen optischen Verbindung erfährt.

4. Optische Verbindung (200) zur Kommunikation zwischen zwei Knoten (201, 202) in einem optischen Kommunikationssystem, wobei die optische Verbindung (200) umfasst:
einen ersten Knoten (201) des optischen Kommunikationssystems;
einen zweiten Knoten (202) des optischen Kommunikationssystems;
eine östliche Faserbindung, die den ersten Knoten (201) und den zweiten Knoten (202) für eine optische Übertragung östlicher optischer Signale optisch koppelt, die sich von dem ersten Knoten (201) zum zweiten Knoten (202) bewegen; und
eine westliche Faserbindung, die den ersten Knoten (201) und den zweiten Knoten (202) für eine optische Übertragung westlicher optischer Signale optisch koppelt, die sich von dem zweiten Knoten (202) zum ersten Knoten (201) bewegen;
wobei die östliche Faserbindung umfasst:
einen östlichen optisch gepumpten Verstärker (213A);
eine östliche Faserstrecke (212A), die den ersten Knoten (201) mit dem östlichen optisch gepumpten Verstärker (213A) verbindet; und
einen östlichen optischen Multiplexer (214A); und
wobei die westliche Faserverbindung umfasst:
eine westliche Raman-Pumpe (221A) in Rückwärtsrichtung an oder nahe bei dem ersten Knoten (201);
einen westlichen optisch gepumpten Verstärker (223A) in Rückwärtsrichtung;
eine westliche Faserstrecke (222A), welche die westliche Raman-Pumpe (221A) in Rückwärtsrichtung mit dem westlichen optisch in Rückwärtsrichtung gepumpten Verstärker (223A) derart verbindet, dass die westliche Raman-Pumpe (221A) in Rückwärtsrichtung optische Energie in Rückwärtsrichtung in die westliche Faserstrecke (222A) injiziert, wodurch bewirkt wird, dass eine Raman-Verstärkung in Rückwärtsrichtung innerhalb der westlichen Faserstrecke (222A) auftritt, und gestattet wird, dass eine verbleibende Menge der injizierten optischen Energie in Rückwärtsrichtung von der westlichen Raman-Pumpe (221A) in Rückwärtsrichtung, die nach der Raman-Verstärkung in Rückwärtsrichtung zurückbleibt, verwendet wird, um den westlichen optisch in Rückwärtsrichtung gepumpten Verstärker (223A) mit Energie zu versorgen;
einen westlichen optischen Demultiplexer (224A), der östlich von dem westlichen optisch in Rückwärtsrichtung gepumpten Verstärker (223A) in der westlichen Faserverbindung positioniert und ausgelegt ist, mindestens die Mehrheit des westlichen optischen Signals weiter in der westlichen Richtung in der westlichen Faserverbindung zum ersten Knoten (201) zu kanalisieren, und ausgelegt ist, mindestens etwas von einer verbleibenden Menge der injizierten optischen Energie in Rückwärtsrichtung von der westlichen Raman-Pumpe (221A) in Rückwärtsrichtung, die nach dem westlichen optisch in Rückwärtsrichtung gepumpten Verstärker (223A) zurückbleibt, umzulenken, um durch den östlichen optischen Multiplexer (214A) in der östlichen Faserverbindung zur Verwendung der Versorgung des östlichen optisch gepumpten Verstärkers (213A) in der östlichen Faserverbindung mit Energie geführt zu werden;
wobei der östliche optisch gepumpte Verstärker (213A) ein östlicher optisch in Vorwärtsrichtung gepumpter Verstärker (213A) ist;
wobei die östliche Faserverbindung weiter umfasst:
eine östliche Raman-Pumpe (211A) in Vorwärtsrichtung an oder nahe bei dem ersten Knoten (201);
einen östlichen optischen Demultiplexer (214A), der östlich von dem östlichen optisch in Vorwärtsrichtung gepumpten Verstärker (213A) in der östlichen Faserverbindung positioniert und ausgelegt ist, mindestens die Mehrheit des östlichen optischen Signals, das den östlichen optischen Demultiplexer (214A) erreicht hat, weiter in der östlichen Richtung zum zweiten Knoten (202) zu kanalisieren, und ausgelegt ist, mindestens etwas von einer verbleibenden Menge der injizierten optischen Energie in Vorwärtsrichtung von der östlichen Raman-Pumpe (211A) in Vorwärtsrichtung, die nach dem östlichen optisch in Vorwärtsrichtung gepumpten Verstärker (213A) zurückbleibt, umzulenken, um in der westlichen Faserverbindung verwendet zu werden; und
wobei die westliche optische Verbindung weiter umfasst:
einen westlichen optischen Multiplexer (224A), der ausgelegt ist, mindestens die Mehrheit des westlichen optischen Signals, das den westlichen optischen Multiplexer (224A) erreicht hat, weiter in der westlichen Richtung zum ersten Knoten (201) zu kanalisieren, und ausgelegt ist, mindestens etwas von der umgelenkten verbleibenden optischen Energie in Vorwärtsrichtung von der östlichen optischen Verbindung auch in den westlichen optisch in Rückwärtsrichtung gepumpten Verstärker (223A) in der westlichen optischen Verbindung umzulenken, um dadurch den westlichen optisch in Rückwärtsrichtung gepumpten Verstärker (223A) weiter mit Energie zu versorgen.

5. Optische Verbindung (200) nach Anspruch 4, wobei:
der östliche optische Multiplexer (214A) in der östlichen Faserverbindung östlich von dem östlichen optisch gepumpten Verstärker (213A) in der östlichen Faserverbindung positioniert ist.

6. Optische Verbindung (200) nach Anspruch 4, wobei:
der östliche optische Multiplexer (214A) in der östlichen Faserverbindung westlich von dem östlichen optisch gepumpten Verstärker (213A) in der östlichen Faserverbindung positioniert ist.

7. Optische Verbindung (200) nach Anspruch 4, wobei der östliche optische Multiplexer (214A) dieselbe Komponente wie der östliche optische Demultiplexer (214A) ist, und wobei der westliche optische Multiplexer (224A) dieselbe Komponente wie der westliche optische Demultiplexer (224A) ist.

8. Optische Verbindung (200) nach Anspruch 4, wobei der erste Knoten (201) und der zweite Knoten (202) beide Anschlüsse in einem System ohne Repeater sind.

9. Optische Verbindung (200) nach Anspruch 4, wobei mindestens einer von dem ersten Knoten (201) und dem zweiten Knoten (202) ein Repeater in einem System mit Repeater ist.

10. Optische Verbindung (200) nach Anspruch 9, wobei der andere von dem ersten Knoten (201) und dem zweiten Knoten (202) auch ein Repeater in dem System mit Repeater ist.

11. Optische Verbindung (200) nach Anspruch 9, wobei der andere von dem ersten Knoten (201) und dem zweiten Knoten (202) ein Anschluss in dem System mit Repeater ist.

12. Optische Verbindung (200) nach Anspruch 4, wobei der westliche optisch in Rückwärtsrichtung gepumpte Verstärker (223A) ein mit seltenen Erden dotierter Faserverstärker ist.

13. Optische Verbindung (200) nach Anspruch 12, wobei der westliche optisch in Rückwärtsrichtung gepumpte Verstärker (223A) ein mit Erbium dotierter Faserverstärker ist.

14. Optische Verbindung (200) nach Anspruch 4, wobei die östliche und westliche optische Verbindung jeweils eine optische Wegdistanz von mehr als 100 Kilometern aufweisen.

## Revendications

1. Procédé d'utilisation d'une liaison optique bidirectionnelle (200) ayant une liaison optique orientale pour une communication d'un premier noeud (201) à un second noeud (202) dans un système de communications optiques et une liaison optique occidentale pour communication du second noeud (202) au premier noeud (201) dans un système de communications optiques, le procédé comprenant :
une action de réception d'un signal optique occidental sur la liaison de fibre occidentale ;
une action d'amplification de Raman vers l'arrière du signal optique occidental en utilisant le pouvoir optique d'une pompe Raman vers l'arrière ;
après qu'une partie du pouvoir optique de la pompe Raman vers l'arrière a été consommée dans l'action d'amplification de Raman vers l'arrière, une action d'utilisation d'au moins une partie du pouvoir optique de la pompe Raman vers l'arrière résiduel pour alimenter un amplificateur à pompage optique vers l'arrière occidental (223A);
une fois qu'une partie résiduelle du pouvoir optique de la pompe Raman vers l'arrière a été utilisée pour alimenter l'amplificateur à pompage optique vers l'arrière occidental (223A), une action de déviation d'au moins une partie du pouvoir optique de la pompe Raman vers l'arrière résiduel vers la liaison optique orientale, où au moins une certaine partie du pouvoir optique dévié est utilisée pour alimenter un amplificateur à pompage optique oriental (213A) pour l'amplification d'un signal optique oriental dans la liaison optique orientale,
dans lequel l'amplificateur à pompage optique oriental (213A) est positionné à l'ouest d'un endroit où la partie déviée du pouvoir optique de la pompe Raman vers l'arrière résiduel entre dans la liaison optique orientale, le procédé comprenant en outre :
une action de transmission d'un signal optique oriental sur la liaison de fibre orientale ;
une action d'amplification de Raman en avant du signal optique oriental en utilisant le pouvoir optique de la pompe Raman vers l'avant ;
après qu'une partie du pouvoir optique de la pompe Raman vers l'avant a été consommée dans l'action d'amplification de Raman vers l'avant, une action d'utilisation d'au moins une partie résiduelle du pouvoir optique de la pompe Raman vers l'avant pour alimenter l'amplificateur à pompage optique oriental (213A) ;
une fois qu'une partie du pouvoir optique de la pompe Raman vers l'avant résiduel a été utilisée pour alimenter l'amplificateur à pompage optique oriental (213A), une action de déviation d'au moins une partie du pouvoir optique de la pompe Raman vers l'avant résiduel vers la liaison optique occidentale, dans lequel au moins une certaine partie du pouvoir optique dévié de la liaison optique orientale est utilisée pour alimenter l'amplificateur à pompage optique vers l'arrière occidental (223A) pour l'amplification du signal optique occidental dans la liaison optique occidentale.

2. Procédé selon la revendication 1, dans lequel la liaison optique occidentale subit une amplification de Raman vers l'arrière pendant au moins 30 kilomètres avant l'action de déviation d'au moins la partie du pouvoir optique de la pompe Raman vers l'arrière résiduel vers la liaison optique orientale.

3. Procédé selon la revendication 1, dans lequel la liaison optique orientale subit une amplification de Raman vers l'avant pendant au moins 30 kilomètres avant l'action de déviation d'au moins la partie du pouvoir optique de la pompe Raman vers l'avant résiduel vers la liaison optique occidentale.

4. Liaison optique (200) pour une communication entre deux noeuds (201, 202) dans un système de communications optiques, la liaison optique (200) comprenant :
un premier noeud (201) du système de communications optiques ;
un second noeud (202) du système de communications optiques,
une liaison de fibre orientale couplant au plan optique le premier noeud (201) et le second noeud (202) pour une transmission optique de signaux optiques orientaux se déplaçant du premier noeud (201) au second noeud (202) ; et
une liaison de fibre occidentale couplant au plan optique le premier noeud (201) et le second noeud (202) pour une transmission optique de signaux optiques occidentaux se déplaçant du second noeud (201) au premier noeud (201),
dans lequel la liaison de fibre orientale comprend :
un amplificateur à pompage optique oriental (213A) ;
une extension de fibre orientale (212A) interconnectant le premier noeud (201) à l'amplificateur à pompage optique oriental (213A) ; et
un multiplexeur optique oriental (214A) ; et
dans lequel la liaison de fibre occidentale comprend :
une pompe Raman vers l'arrière occidental (221A) au premier noeud (201) ou à proximité de celui-ci ;
un amplificateur à pompage optique vers l'arrière occidental (223A) ;
une extension de fibre occidentale (222A) interconnectant la pompe Raman vers l'arrière occidental (221A) à l'amplificateur à pompage optique vers l'arrière occidental (223A) de sorte que la pompe Raman vers l'arrière occidentale (221A) injecte un pouvoir optique vers l'arrière dans l'extension de fibre occidentale (222A), en sorte d'amener l'amplification de Raman vers l'arrière à se produire dans l'extension de fibre occidentale (222A) et de permettre d'utiliser une quantité résiduelle du pouvoir optique vers l'arrière injecté par la pompe Raman vers l'arrière occidentale (221A) qui reste après l'amplification de Raman vers l'arrière pour alimenter l'amplificateur à pompage optique vers l'arrière occidental (223A) ;
un démultiplexeur optique occidental (224A) positionné à l'est de l'amplificateur à pompage optique vers l'arrière occidental (223A) dans la liaison de fibre occidentale et configuré pour canaliser au moins une majeure partie du signal optique occidental plus loin dans la direction occidentale de la liaison de fibre occidentale vers le premier noeud (201) et configuré pour rediriger au moins une certaine partie de la quantité résiduelle du pouvoir optique vers l'arrière injecté par la pompe Raman vers l'arrière occidentale (221A) qui reste après le passage de l'amplificateur à pompage optique vers l'arrière occidental (223A) à travers le multiplexeur optique oriental (214A) dans la liaison de fibre orientale pour utilisation dans l'alimentation de l'amplificateur à pompage optique oriental (213A) dans la liaison de fibre orientale ;
dans lequel l'amplificateur à pompage optique oriental (213A) est un amplificateur à pompage optique vers l'avant oriental (213A) ;
dans lequel la liaison de fibre orientale comprend en outre :
une pompe Raman vers l'avant orientale (211A) au premier noeud (201) ou à proximité de celui-ci ;
un démultiplexeur optique oriental (214A) positionné à l'est de l'amplificateur à pompage optique vers l'avant oriental (213A) dans la liaison de fibre orientale et configuré pour canaliser au moins une majeure partie du signal optique oriental qui a atteint le démultiplexeur optique oriental (214A) plus loin dans la direction orientale vers le second noeud (202) et configuré pour rediriger au moins une certaine partie de la quantité résiduelle du pouvoir optique vers l'avant injecté par la pompe Raman vers l'avant orientale (211A) qui reste après l'amplificateur à pompage optique vers l'avant oriental (213A) pour être utilisé dans la liaison de fibre occidentale ; et dans lequel la liaison optique occidentale comprend en outre :
un multiplexeur optique occidental (224A) configuré pour canaliser au moins une majeure partie du signal optique occidental qui a atteint le multiplexeur optique occidental (224A) plus loin dans la direction occidentale vers le premier noeud (201) et configuré pour rediriger au moins une certaine partie du pouvoir optique vers l'avant résiduel redirigé depuis la liaison optique orientale également dans l'amplificateur à pompage optique vers l'arrière occidental (223A) dans la liaison optique occidentale pour ainsi alimenter encore l'amplificateur à pompage optique vers l'arrière occidental (223A).

5. Liaison optique (200) selon la revendication 4, dans laquelle :
le multiplexeur optique oriental (214A) dans la liaison de fibre orientale est positionné à l'est de l'amplificateur à pompage optique oriental (213A) dans la liaison de fibre orientale.

6. Liaison optique (200) selon la revendication 4, dans laquelle :
le multiplexeur optique oriental (214A) dans la liaison de fibre orientale est positionné à l'ouest de l'amplificateur à pompage optique oriental (213A) dans la liaison de fibre orientale.

7. Liaison optique (200) selon la revendication 4, dans laquelle le multiplexeur optique oriental (214A) est le même composant que le démultiplexeur optique oriental (214A) et dans lequel le multiplexeur optique occidental (224A) est le même composant que le démultiplexeur optique occidental (224A).

8. Liaison optique (200) selon la revendication 4, dans laquelle le premier noeud (201) et le second noeud (202) sont tous deux des terminaux dans un système non répété.

9. Liaison optique (200) selon la revendication 4, dans laquelle au moins l'un du premier noeud (201) et du second noeud (202) est un répéteur dans un système répété.

10. Liaison optique (200) selon la revendication 9, dans laquelle l'autre du premier noeud (201) et du second noeud (202) est également un répéteur dans le système répété.

11. Liaison optique (200) selon la revendication 9, dans laquelle l'autre du premier noeud (201) et du second noeud (202) est un terminal dans le système répété.

12. Liaison optique (200) selon la revendication 4, dans lequel l'amplificateur à pompage optique vers l'arrière occidental (223A) est un amplificateur à fibre dopée aux terres rares.

13. Liaison optique (200) selon la revendication 12, dans laquelle l'amplificateur à pompage optique vers l'arrière occidental (223A) est un amplificateur à fibre dopée à l'erbium.

14. Liaison optique (200) selon la revendication 4, dans laquelle les liaisons optiques orientale et occidentale ont chacune plus de 100 kilomètres de distance de trajet optique.
